Europäisches Patentamt

European Patent Office

Office européen des brevets

(19)

(11) EP 0 730 619 B1

(12) EUROPÄISCHE PATENTSCHRIFT

(45) Veröffentlichungstag und Bekanntmachung des
Hinweises auf die Patenterteilung:
17.09.1997 Patentblatt 1997/38

(51) Int Cl.⁶: **C08J 9/14**, C08J 9/12
// C08L75:04

(21) Anmeldenummer: 95900122.3

(22) Anmeldetag: 09.11.1994

(86) Internationale Anmeldenummer:
PCT/EP94/03688

(87) Internationale Veröffentlichungsnummer:
WO 95/14730 (01.06.1995 Gazette 1995/23)

(54) **VERFAHREN ZUR HERSTELLUNG VON HARTEN POLYURETHANSCHAUMSTOFFEN**

PROCESS FOR PRODUCING HARD POLYURETHANE FOAMS

PROCEDE DE PRODUCTION DE MOUSSES DE POLYURETHANE DURES

(84) Benannte Vertragsstaaten:
AT BE CH DE DK ES FR GB GR IT LI NL PT SE
Benannte Erstreckungsstaaten:
SI

(30) Priorität: 22.11.1993 DE 4339702

(43) Veröffentlichungstag der Anmeldung:
11.09.1996 Patentblatt 1996/37

(73) Patentinhaber: BAYER AG
51368 Leverkusen (DE)

(72) Erfinder:
• EISEN, Norbert
D-50937 Köln (DE)
• KLÄN, Walter
D-51373 Leverkusen (DE)
• OTTO, Frank
D-40724 Hilden (DE)
• THOMPSON-COLON, James Bayer de México
S.A. de C.V.
55540 Sta. Clara (MX)

(56) Entgegenhaltungen:
EP-A- 0 465 922          EP-A- 0 472 080
WO-A-92/16573           DE-A- 4 026 893
DE-A- 4 129 285         DE-C- 4 225 765
US-A- 5 244 931

• DATABASE WPI Derwent Publications Ltd.,
London, GB; AN 92-345080]42] & JP,A,4 249 513
(MITSUI TOATSU CHEM. INC.) 4. September 1992

**Beschreibung**

Die Erfindung betrifft harte Urethangruppen-aufweisende Schaumstoffe, die ohne die Verwendung von Fluorchlorkohlenwasserstoffen hergestellt werden.

Geschlossenzellige Polyurethan-Hartschaumstoffe finden schon seit vielen Jahren aufgrund ihrer hervorragenden Wärmedämmeigenschaften Anwendung bei der Dämmung von Kühl- und Gefriergeräten, von industriellen Anlagen, Tanklagern, Rohrleitungen, im Schiffsbau sowie bei zahlreichen Dämmaufgaben in der Bauindustrie.

Die Wärmeleitfähigkeit des Polyurethan-Hartschaumstoffes, der weitgehend geschlossene Zellen aufweist, ist in starkem Maße abhängig von der Art des verwendeten Treibmittels bzw. Zellgases. Als besonders geeignet hatten sich hierzu die perhalogenierten Fluorchlorkohlenwasserstoffe (FCKW) erwiesen, insbesondere Trichlorfluormethan (R11), welches eine besonders geringe Wärmeleitfähigkeit aufweist. Diese Stoffe sind chemisch inert, infolgedessen ungiftig und nicht brennbar. Die perhalogenierten Fluorchlorkohlenwasserstoffe gelangen jedoch infolge ihrer hohen Stabilität in die Stratosphäre, wo sie aufgrund ihres Gehaltes an Chlor zum Abbau des dort vorhandenen Ozons beitragen sollen (z.B. Mario J. Molina und F.S. Rowland, Nature, 249 (1974) S. 810, und erster Zwischenbericht der Bundestags-Enquete-Kommission "Vorsorge zum Schutz der Erdatmosphäre" vom 2.11.1988, Deutscher Bundestag, Referat Öffentlichkeitsarbeit, Bonn).

Man hat daher vorgeschlagen, anstelle des perhalogenierten Fluorchlorkohlenwasserstoffs unsubstituierte Kohlenwasserstoffe (Alkane) als Treibmittel für Schaumstoffe einschließlich Polyurethanschaumstoffe zu verwenden.

Die Alkane enthalten keine Chloratome und weisen infolgedessen einen ODP-Wert (Ozone Depletion Potential) von Null auf (zum Vergleich: R11 besitzt einen ODP-Wert von 1).

Typische Vertreter der Alkane als Treibmittel sind neben dem Isopentan und n-Pentan das Cyclopentan.

Kohlenwasserstoffe sind aufgrund ihres chemischen Aufbaues sehr unpolar und mischen sich daher schlecht mit den für die Hartschaumstoffstoffherstellung gebräuchlichen Polyolen und Isocyanaten. Dies ist aber eine wichtige Voraussetzung für die übliche Herstellungstechnik, bei der die Polyol- und Isocyanatkomponenten maschinell miteinander vermischt werden.

Die Polyolkomponente enthält außer den reaktiven Polyether- oder Polyesterpolyolen auch das Treibmittel und die Hilfsstoffe wie Aktivatoren, Emulgatoren und Stabilisatoren in gelöster Form. Auf der Polyolseite liegt also ein einphasiges Gemisch vor.

Die geringe Löslichkeit der Kohlenwasserstoffe führt oftmals bei äquimolarem Austausch der herkömmlichen Treibmittel, wie z.B. R11, gegen die umweltfreundlicheren Verbindungen (Alkane) in handelsüblichen Formulierungen zur Bildung zweier Phasen, die sich konventionell nicht mehr verarbeiten lassen.

Aufgabe der Erfindung war es daher, die Löslichkeit von Kohlenwasserstoffen in Polyolen zu erhöhen, so daß bei äquimolarem Ersatz von z.B. R11 durch diese Kohlenwasserstoffe eine einphasige Polyolkomponente erhalten wird.

Die Herstellung harter Polyurethanschaumstoffe unter Verwendung von Hydrofluoralkanen als Treibmittel und Lösungsvermittlern ist in der DE-PS 42 25 765 beschrieben.

Überraschenderweise wurde nun gefunden, daß bei Zugabe bestimmter, nachstehend näher beschriebener Lösungsvermittler auch die Löslichkeit von Kohlenwasserstoffen im Polyol deutlich erhöht wird.

Gegenstand der Erfindung ist ein Verfahren zur Herstellung von harten Urethangruppen aufweisenden Schaumstoffen durch Umsetzung von

a) Polyisocyanaten mit

b) mindestens zwei gegenüber Isocyanatgruppen aktive Wasserstoffatome aufweisenden Verbindungen mit einem Molekulargewicht von 92 bis 10 000 in Gegenwart von

c) Wasser und Alkanen als Treibmittel und von

d) Lösungsvermittlern sowie gegebenenfalls in Gegenwart von

e) weiteren an sich bekannten Hilfs- und Zusatzstoffen,

dadurch gekennzeichnet, daß als Lösungsvermittler d) mindestens eine polare Gruppen aufweisende Verbindung,. ausgewählt aus der Gruppe bestehend aus Diethylcarbonat, einem Reaktionsprodukt aus 2 Molen Tallölfettsäure und 1 Mol 3-Dimethylaminopropylamin-1, Methyltrioctylammoniumchlorid verwendet wird.

Für die Herstellung der harten Polyurethanschaumstoffe werden als Ausgangskomponenten eingesetzt:

a) Aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise

solche der Formel:

$$Q(NCO)_n,$$

in der

n 2 bis 4, vorzugsweise 2 bis 3, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,

z.B. solche Polyisocyanate, wie sie in der DE-OS 2 832 253, Seiten 10-11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Ausgangskomponenten sind ferner Verbindungen mit mindestens zwei gegenüber Isocyanaten reaktionsfähigen Wasserstoffatomen und einem Molekulargewicht in der Regel von 92 bis 10 000. Das Molekulargewicht errechnet sich aus der Funktionalität und der OH-Zahl. Unter den gegenüber Isocyanaten reaktionsfähige Wasserstoffatome aufweisenden Verbindungen versteht man solche mit Aminogruppen, Thiolgruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, vorzugsweise solche vom Molekulargewicht 200 bis 1 200, besonders bevorzugt 250 bis 500, z.B. derartige, mindestens 2, in der Regel 2 bis 8, vorzugsweise 2 bis 6, Hydroxylgruppen aufweisende Polyether und Polyester, wie sie für die Herstellung von homogenen und von zellförmigen Polyurethanen an sich bekannt sind und wie sie z.B. in der DE-OS 2 832 253, Seiten 11-18, beschrieben werden.

c) Als Treibmittel werden Wasser und leicht flüchtige Kohlenwasserstoffe (Alkane) verwendet, vorzugsweise Cyclopentan und/oder Pentan und/oder Isopentan.

d) Als Lösungsvermittler werden die vorstehend genannten Verbindungen d) eingesetzt.

Erfindungsgemäß werden die genannten Lösungsvermittler in Mengen von 1 bis 10 Gew.-Teilen, bevorzugt 2 bis 5 Gew.-Teilen, bezogen auf 100 Gew.-Teile der Komponente b) eingesetzt.
e) Gegebenenfalls mitverwendet werden weitere an sich bekannte Hilfs- und Zusatzstoffe, wie Flammschutzmittel, Katalysatoren und Schaumstabilisatoren.
Als Flammschutzmittel werden an sich bekannte Flammschutzmittel, vorzugsweise bei 20°C flüssige Produkte, verwendet.
Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Als Katalysatoren kommen die aus der Polyurethanchemie an sich bekannten Katalysatoren wie tert.-Amine und/oder metallorganische Verbindungen in Frage.
Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.
Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmended Substanzen, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 121 bis 205, beschrieben.

Erfindungsgemäß wird im NCO-Kennzahlbereich von 100 bis 300, vorzugsweise 100 bis 130, gearbeitet.

Bei der Schaumherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumtähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Vefahrensweise ist z.B. aus den US-PS 3 178 490 und 3 182 104 bekannt.

Vorzugsweise wird das erfindungsgemäße Verfahren zur Ausschäumung von Kühl- und Kältegeräten verwendet.

Selbstverständlich können aber auch Schaumstoffe durch Blockverschäumung oder nach dem an sich bekannten Doppeltransportbandverfahren hergestellt werden.

Die nach der Erfindung erhältlichen Hartschaumstoffe finden Anwendung z.B. im Bauwesen sowie für die Dämmung von Fernwärmerohren und Containern.

### Ausführungsbeispiele

Zur Demonstration der Wirkungsweise der erfindungsgemäßen Lösungsvermittler werden 100 g einer Polyolmischung, bestehend aus 95 g eines funktionellen Polyhydroxypolyethers, der ein Propoxylierungsprodukt von Sucrose, Propylenglykol und Wasser als Starter mit einem mittleren Molekulargewicht von 850 g/Mol und einer OH-Zahl von 380 ist, 1 g Aktivator dimethylcyclohexylamin), 2 g Stabilisator B 8421® (der Fa. Goldschmidt AG), 2 g Wasser und jeweils 5 g der erfindungsgemäßen Lösungsvermittler so lange mit Cyclopentan versetzt, bis eine Phasentrennung zu verzeichnen ist. Die so ermittelte Cyclopentanmenge wird im folgenden als Grenzkonzentration der Löslichkeit bezeichnet. Es werden als Lösungsvermittler verwendet:

1. Diethylcarbonat,
2. ein Reaktionsprodukt aus zwei Molen Tallölfettsäure und einem Mol 3-Dimethylaminopropylamin- 1,
3. Methytrioctylammoniumchlorid.

Die ermittelten Grenzkonzentrationen sind in Tabelle 1 zusammengefaßt.

Tabelle 1

| Löslichkeit von Cyclopentan [g] | | | | |
|---|---|---|---|---|
| | Vergleich ohne Lösungsvermittler | Beispiel 1 mit Lösungsvermittler 1 | Beispiel 2 mit Lösungsvermittler 2 | Beispiel 3 mit Lösungsvermittler 3 |
| Grenzkonzentration von Cyclopentan (g) in 100 g Polyolmischung | 12 | 15 | 20 | 17 |

Die erfindungsgemäßen Beispiele 1 bis 3 zeigen deutlich, daß die löslichen Mengen von Cyclopentan in der Polyolmischung gegenüber dem Vergleichsbeispiel gesteigert werden konnten.

Je höher die lösliche Menge des Cyclopentans in der Polyolmischung, um so höher ist sein Anteil im Zellgas des daraus hergestellten Hartschaumstoffes und um so geringer ist damit auch seine Wärmeleitzahl.

### Patentansprüche

1. Verfahren zur Herstellung von harten Urethangruppen aufweisenden Schaumstoffen durch Umsetzung von

a) Polyisocyanaten mit

b) mindestens zwei gegenüber Isocyanaten aktive Wasserstoffatome aufweisenden Verbindungen vom Molekulargewicht 92 bis 10 000 in Gegenwart von

c) Wasser und Alkanen als organische Treibmittel und von

d) Lösungsvermittlern sowie gegebenenfalls in Gegenwart von

e) weiteren an sich bekannten Hilfs- und Zusatzstoffen,

dadurch gekennzeichnet, daß als Lösungsvermittler d) mindestens eine polare Gruppen aufweisende Verbindung, ausgewählt aus der Gruppe bestehend aus Diethylcarbonat, einem Reaktionsprodukt aus 2 Molen Tallölfettsäure und 1 Mol 3-Dimethylaminopropylamin-1, Methyltrioctylammoniumchlorid verwendet wird.

2. Verfahren nach Anspruch 1, dadurch gekennzeichnet, daß die Lösungsvermittler in Mengen von 1 bis 10 Gew.-Teilen, bevorzugt 3 bis 5 Gew.-Teilen, bezogen auf 100 Gew.-Teile der Komponente b) eingesetzt werden.

3. Verfahren nach Ansprüchen 1 bis 2, dadurch gekennzeichnet, daß als Treibmittel Cyclopentan verwendet wird.

4. Verfahren nach Ansprüchen 1 bis 2, dadurch gekennzeichnet, daß als Treibmittel Isopentan verwendet wird.

5. Verfahren nach Ansprüchen 1 bis 2, dadurch gekennzeichnet, daß als Treibmittel n-Pentan verwendet wird.

## Claims

1. Process for preparing rigid foams which contain urethane groups by reacting

   a) polyisocyanates with

   b) compounds which possess at least two hydrogen atoms which are active towards isocyanates and have a molecular weight of 92 to 10 000 in the presence of

   c) water and alkanes as organic blowing agent and of

   d) solution promoters and optionally in the presence of

   e) further additives and auxiliary agents known per se,

   characterised in that a compound with at least one polar group, selected from the group comprising diethyl carbonate, a reaction product of 2 moles of tall oil fatty acid and 1 mole of 3-dimethylaminopropylamine-l, methyltrioctylammonium chloride, is used as solution promoter d).

2. Process according to Claim 1, characterised in that the solution promoter is used in amounts of 1 to 10 parts by wt., preferably 3 to 5 parts by wt., with reference to 100 parts by wt. of component b).

3. Process according to Claims 1 to 2, characterised in that cyclopentane is used as blowing agent.

4. Process according to Claims 1 to 2, characterised in that isopentane is used as blowing agent.

5. Process according to Claims 1 to 2, characterised in that n-pentane is used as blowing agent.

## Revendications

1. Procédé pour la préparation de mousses rigides à groupes uréthanne par réaction de

   a) des polyisocyanates, avec
   b) des composés portant au moins deux atomes d'hydrogène actifs à l'égard des groupes isocyanate, de poids moléculaire 92 à 10 000, en présence de

c) de l'eau et des alcanes servant d'agents porogènes et
d) des agents solubilisants, et le cas échéant en présence de
e) d'autres produits auxiliaires et additifs connus en soi,

caractérisé en ce que l'on utilise en tant qu'agent solubilisant d) au moins un composé portant des groupes polaires et choisi parmi le carbonate de diéthyle, un produit de réaction de 2mol d'acides gras de tall-oil et 1 mol de 3-diméthylaminopropylamine-1 et le chlorure de méthyltrioctylammonium.

2. Procédé selon la revendication 1, caractérisé en ce que l'agent solubilisant est mis en oeuvre en quantité de 1 à 10 parties en poids, de préférence de 3 à 5 parties en poids pour 100 parties en poids du composants b).

3. Procédé selon les revendications 1 et 2, caractérisé en ce que l'agent porogène utilisé est le cyclopentane.

4. Procédé selon les revendications 1 et 2, caractérisé en ce que l'agent porogène utilisé est l'isopentane.

5. Procédé selon les revendications 1 et 2, caractérisé en ce que l'agent porogène utilisé est le n-pentane.